# FASCICULE DE BREVET EUROPEEN

(11) **EP 2 804 469 B1**
(45) Date de publication et mention de la délivrance du brevet: **01.07.2020**
(21) Numéro de dépôt: 12819096.4
(22) Date de dépôt: 19.12.2012
(51) Int. Cl.: A01G 13/02, A01G 25/06

(54) **COMPLEXE TEXTILE D'IRRIGATION**
BEWÄSSERUNGSMATTE
IRRIGATION MAT

(30) Priorité: 20.01.2012 FR 1250589
(43) Date de publication de la demande: 26.11.2014
(73) Titulaire: MDB Texinov, 38110 Saint Didier de la Tour (FR); Deltaval, 69006 Lyon (FR)
(72) Inventeur: DUCOL, Jean-Paul, F-69170 Les Sauvages (FR); MOINEREAU, Francis, F-69004 Lyon (FR); TANKERE, Jacques, F-01800 Meximieux (FR)
(74) Mandataire: Cabinet Laurent & Charras
(86) Numéro de dépôt international: PCT/FR2012/052984
(87) Numéro de publication internationale: WO 2013/107954

(56) Documents cités:
- EP-B1- 0 774 894
- FR-A1- 2 850 527
- FR-A1- 2 886 098
- FR-A2- 2 331 953
- US-A- 5 938 372

## Description

### DOMAINE DE L'INVENTION

La présente invention s'inscrit dans le domaine de l'irrigation et vise, à cet effet, un complexe d'irrigation de nature notamment textile.

Plus spécifiquement, elle vise un dispositif susceptible d'être mis en œuvre au niveau des toitures afin de réaliser des toitures végétalisées, mais également de tout support, et particulièrement des supports inclinés type talus, etc..

### ARRIERE-PLAN TECHNOLOGIQUE

Le problème de l'irrigation étant endémique, de nombreuses solutions ont été proposées à ce jour.

Parmi celles-ci figurent celle décrite dans le document EP 1 420 627. Cette solution consiste à positionner entre deux nappes réalisées en non-tissé des tuyaux d'irrigation perforés, séparés les uns des autres par des rubans de remplissage textiles destinés à fixer de manière ferme lesdits tuyaux d'irrigation d'une part, les uns par rapport aux autres, et d'autre part, par rapport aux nappes qui les enserrent. Les nappes de non-tissé sont également associées l'une à l'autre parallèlement à la direction d'extension des tuyaux.

Ce produit s'avère relativement complexe à réaliser. Il interdit tout déplacement relatif des tuyaux par rapport aux nappes de non-tissé dans lesquelles ils sont enfermés, induisant des difficultés, voir des risques de rupture desdits tuyaux ou leur déboitement hors des raccords auxquels ils sont connectés en raison des phénomènes de dilatation liés aux écarts de température classiquement observés.

Dans le même ordre d'idée, il a été proposé, par exemple dans le document EP 0 774 894 un système capillaire d'irrigation constitué de deux nappes réalisées en matériau capillaire définissant des poches au sein desquelles s'étendent des conduits perforés. Là encore, les conduits présentent peu de latitude en terme de déplacement latéral, au regard de leur dimension principale longitudinale. Ce faisant, on se heurte encore à des problèmes liés au phénomène de dilatation thermique.

Le document FR 2 886 098 un dispositif de même nature, dans lequel les conduits sont emprisonnés dans un filet, susceptible d'être associé à une nappe de diffusion. Ce dispositif ne résoud pas le problème mentionné précédemment.

En résumé, de manière générale, les dispositifs d'irrigation disponibles à ce jour s'avèrent, soit d'un coût prohibitif, les disqualifiant pour l'usage principal auquel ils sont destinés, soit se heurtent à des problèmes de régularité de l'irrigation, et notamment d'une diffusion aussi uniforme que possible de l'eau ou du liquide d'irrigation sur une surface déterminée, soit encore, se heurtent en raison même de leur contexture ou de leur mode de réalisation à des problèmes de difficulté de pose, notamment sur des toitures, et de manière générale sur des surfaces en pente, soit justement en raison de leur relative rigidité, soit en raison de leur poids.

On se heurte également au problème inhérent au développement du système racinaire des plantes destinées à assurer la végétalisation, par exemple des toitures, qui tendent à venir obstruer les perforation ou orifices traversants dont sont munis les canalisations, tuyaux ou conduits mis en œuvre dans les dispositif d'irrigation de l'état antérieur de la technique. C'est d'ailleurs pour lutter contre cette difficulté qu'un certain nombre d'entre elles enserrent ou emprisonnent de manière aussi étanche que possible lesdits tuyaux d'irrigation pour éviter la pénétration desdites racines dans l'enveloppe définie entre les deux nappes.

### EXPOSE DE L'INVENTION

L'invention vise un tel dispositif ou complexe d'irrigation textile en accord avec la revendication 1, satisfaisant tout à la fois l'exigence résultant d'une diffusion uniforme et aussi régulière que possible de l'eau ou du liquide d'irrigation sur une surface déterminée, tout en permettant une certaine liberté aux conduits ou tuyaux au sein desquels est acheminé le liquide ou l'eau d'irrigation, d'un poids raisonnable, en tout cas compatible avec l'une des applications envisagées, à savoir la mise en place sur des toitures, et de fabrication aisée.

A cet effet, l'invention vise un complexe d'irrigation textile comprenant une nappe de diffusion hydraulique réalisée en un matériau non-tissé, et une pluralité de conduits au sein desquels transite l'eau ou le liquide d'irrigation.

Selon l'invention, ces conduits ou tuyaux sont solidarisés à la nappe de diffusion hydraulique au moyen d'une grille ouverte tissée, tricotée ou extrudée, fixée à la nappe de diffusion hydraulique en non-tissé par un moyen thermique, ultrasonique ou par couture ou encore par collage. En outre, les conduits ou tuyaux ne sont pas solidaires de ladite grille ouverte.

En d'autres termes, l'invention consiste tout d'abord à remplacer le moyen de fixation des tuyaux ou conduits, non plus par un non-tissé ou équivalent, mais au contraire par une grille ajourée, c'est-à-dire présentant des ouvertures, et donc dépourvue de toute propriété capillaire et non destinée à assurer une quelconque diffusion de l'eau ou du liquide d'irrigation, cette fonction étant dévolue à la nappe de diffusion hydraulique inférieure, puis à fixer de manière relativement lâche les tuyaux ou conduits d'irrigation sur cette nappe de diffusion hydraulique. De fait l'association de la ou des grilles ouvertes avec la nappe de diffusion hydraulique définit des poches, au sein desquels les conduits ou tuyaux d'irrigation présentent une faculté de débattement latéral, c'est-à-dire selon une direction autre que la dimension principale de leur extension. Cette faculté de débattement latéral résulte du fait que les tuyaux ou conduits ne sont pas solidaires de la grille ouverte.

Ce faisant, tout d'abord on observe un gain de poids significatif puisqu'aussi bien, les grilles ajourées, bien que pourvues de propriété mécaniques suffisantes, sont d'un poids extrêmement plus réduit que les nappes en non-tissé, et en outre, on confère aux tuyaux ou conduits d'irrigation un relativement grand degré de débattement latéral au regard de leur dimension longitudinale principale.

Selon l'invention, la nappe de diffusion hydraulique est constituée d'un non-tissé à base de fibres recyclées, par exemple en polypropylène ou en fibres naturelles. Elle présente une masse surfacique comprise entre 200 et 500 g/m², une capacité de rétention d'eau comprise de 200 à 800 % en poids, correspondant à une capacité de rétention en volume comprise dans la fourchette de 0.6 à 3.2 l/m².

Selon une variante de l'invention, la grille supérieure peut être constituée de bandes, c'est-à-dire dont l'une des dimensions est nettement inférieure à la dimension correspondant à la dimension selon laquelle s'étendent les tuyaux ou conduits d'irrigation.

Selon une autre caractéristique de l'invention, on interpose entre la surface destinée à recevoir le complexe d'irrigation textile et ledit complexe un espaceur, également dénommé géo-espaceur, destiné à assurer une fonction de drainage et/ou d'isolation par rapport à une toiture. Cet espaceur est solidarisé réversiblement à la nappe de diffusion hydraulique, par exemple au moyen d'un système à boucles ou à picots, tel que bien connu sous la marque déposée VELCRO®.

Dans ce contexte particulier, l'espaceur peut également comprendre des fils de renforcement, par exemple réalisés en polyester ou polypropylène haute ténacité afin de conférer à l'ensemble du complexe une résistance mécanique accrue.

Selon encore une autre caractéristique de l'invention, les poches définies par l'association de la nappe de diffusion hydraulique et avec la ou les grilles ouvertes peuvent recevoir en outre des tuyaux de drainage ou des tuyaux de câbles ou de chauffage, voire des éléments linéaires susceptibles d'assurer d'autres fonctions d'instrumentation ou de détection à l'aide de fibre(s) optique(s) instrumentée(s) ou d'autres capteurs .

### BREVE DESCRIPTION DES FIGURES

La manière dont l'invention peut être réalisée et les avantages qui en découlent, ressortiront mieux des exemples de réalisation qui suivent, donnés à titre indicatif et non-limitatif à l'appui des figures annexées.
La figure 1 est une représentation schématique en perspective du complexe d'irrigation textile conforme à une première forme de réalisation de l'invention, dont la figure 2 est une vue en section transversale.
La figure 3 est une vue partielle, analogue à la figure 1, d'un autre mode de réalisation de l'invention, dont la figure 4 est également une vue en section transversale.
La figure 5 est une vue schématique en section transversale tendant à illustrer le principe d'irrigation et du goutteur mis en œuvre dans le cadre de la présente invention.
Les figures 6a et 6b sont deux exemples de réalisation de la grille ouverte supérieure mise en œuvre dans le cadre de l'invention.
Les figures 7 et 8 représentent des exemples de mise en œuvre du complexe d'irrigation textile de l'invention, respectivement au sein d'une culture et sur un talus paysagé.
Les figures 9a, 9b et 9c illustrent le complexe de l'invention associé avec une structure bi-fonctionnelle de renfort et/ou de drainage ou assurant la fonction d'une couche isolante inférieure, respectivement en perspective, en section transversale et en place sur un support incliné, tel un toit ou un talus.
La figure 10 est une représentation schématique tendant à illustrer un mode de solidarisation du complexe d'irrigation de l'invention avec une structure bi-fonctionnelle, du type de celle décrite au sein des figures 9a à 9c.

### DESCRIPTION DETAILLEE DE L'INVENTION

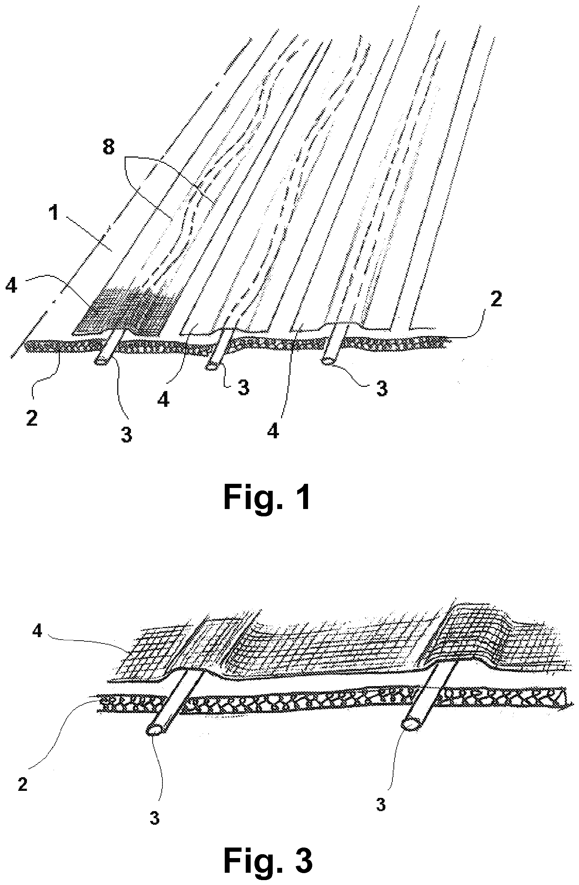

On a donc représenté en relation avec la figure 1 une vue schématique et en perspective du complexe d'irrigation textile **1** conforme à l'invention.

Fondamentalement, celui-ci comporte tout d'abord une nappe de diffusion hydraulique inférieure **2,** c'est-à-dire amenée à être positionnée soit directement, soit indirectement sur un support plat ou en pente.

Cette nappe est constituée d'un non-tissé, par exemple réalisé à base de fibres recyclées, telles que notamment les polypropylènes, ou en fibres naturelles.

Dans la mesure où cette nappe a vocation à assurer la diffusion de l'eau ou d'un liquide d'irrigation, on lui confère des propriétés, notamment de rétention d'eau, typiquement comprises entre 200 et 800% en masse. Cette rétention est susceptible de s'exprimer en volume, c'est-à-dire que la nappe **1** est susceptible de retenir entre 0.6 et 3.2 l/m².

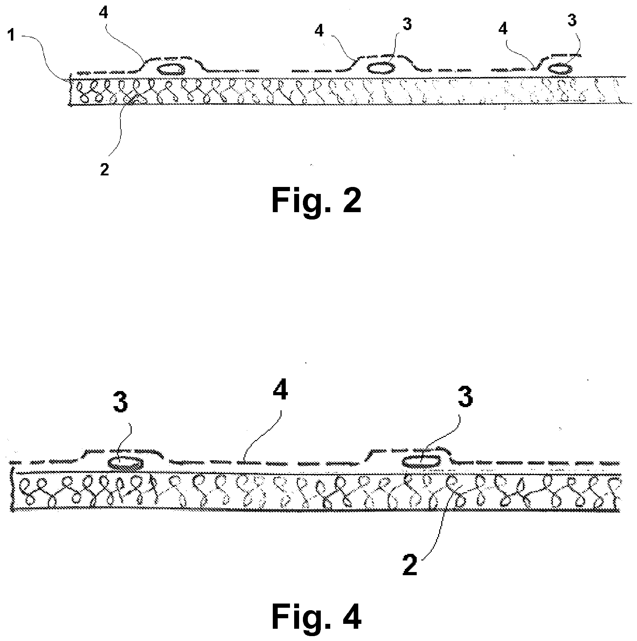

Par ailleurs, un certain nombre de tubes ou tuyaux d'irrigation **3** sont rapportés ou fixés sur la nappe de diffusion **2,** et plus exactement sont fixés sur celle-ci au moyen d'une grille supérieure ajourée **4,** soit sous forme de bandes (figures 1 et 2), soit sous forme d'une nappe continue (figures 3 et 4).

Qu'il s'agisse d'une grille supérieure continue ou de bandes, cette fixation à la nappe de diffusion hydraulique **2** est réalisée de façon à laisser un certain débattement latéral aux tuyaux ou aux conduits d'irrigation **3,** tel qu'on peut bien l'observer, notamment sur la figure 1, dans laquelle lesdits tuyaux, notamment de gauche, présentent une certaine ondulation, tendant justement à illustrer la possibilité pour ces derniers de se déplacer dans un sens transversal. Cette faculté est conférée aux tuyaux et autres conduits d'irrigation afin de leur permettre un débattement en raison notamment des phénomènes de dilatation thermique. Elle résulte de l'absence de solidarisation des tuyaux ou conduits à la grille supérieure, que celle-ci se présente sous la forme d'une nappe continue ou sous la forme de bandes. En raison de cette possibilité de débattement, on limite les risques de rupture desdites tuyaux, outre les risques de déboîtement hors des raccords auxquels sont connectés ces tuyaux, et les alimentant en eau ou en liquide d'irrigation.

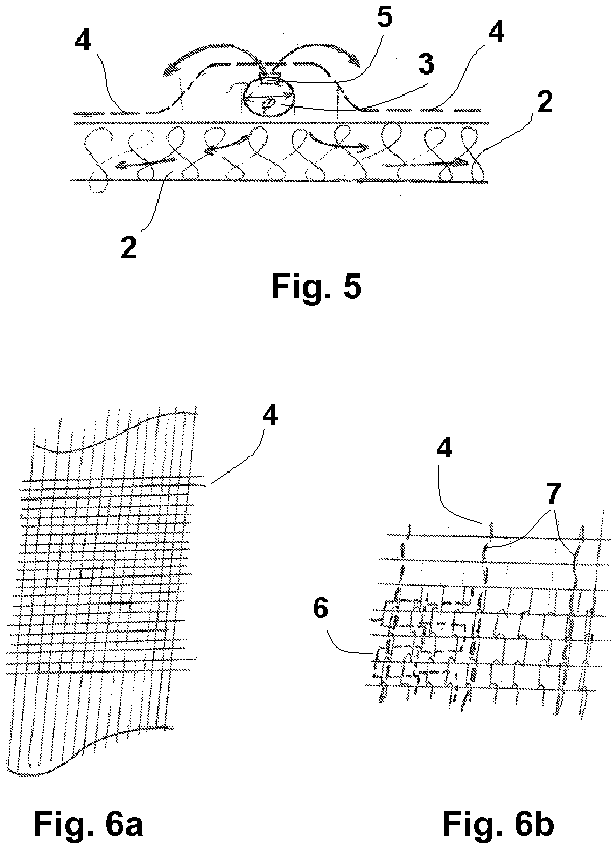

Cette grille **4** peut être de différentes natures, et notamment illustrées sur les figures 6a et 6b. Il peut ainsi s'agir (figure 6a) d'une simple grille légère, assez fine, obtenue par tissage ou tricotage. Elle peut également être obtenue par extrusion.

Dans tous les cas, elle définit des ouvertures de maille de 2 jusqu'à 5 millimètres. En d'autres termes, cette grille **4,** en raison des orifices qu'elle définit, n'a nullement vocation à empêcher la circulation de l'eau susceptible de résulter du goutte à goutte provenant des tuyaux ou conduits d'irrigation **3.**

Cette grille **4** peut être réalisée en polypropylène ou en polyéthylène.

Elle peut être réalisée selon la technologie de tricotage dite à mailles jetées, comme par exemple en chainettes tramées ou du type « marquisette », toujours en polypropylène ou en polyéthylène, mais plus généralement en polyoléfine.

Cette grille **4,** telle qu'illustrée à la figure 6b, peut également être réalisée par la technologie maille jetée avec insertion de câbles cabestan **6** dans le sens production, afin de lui conférer de la résistance mécanique. Cette résistance est en outre renforcée par la mise en œuvre de fils de renfort **7** orientés selon le sens de production, et en l'espèce, parallèlement à la dimension principale du complexe et parallèlement à l'orientation des tuyaux ou conduits d'irrigation.

Une telle résistance est particulièrement recherchée pour les applications du complexe de l'invention aux talus ou pentes, tels que notamment les toitures, pour lesquelles il peut exister une surcharge de sol ou de terre végétale. Dans cette hypothèse, la résistance dans le sens longitudinal peut être de 10 ou 20 voire atteindre 120 kN/m.

Quelle que soit la nature de la grille, celle-ci est solidarisée à la nappe de diffusion hydraulique **2** par association thermique, ou par ultrasons, typiquement selon des lignes de fixation **8** notamment illustrées sur la figure 1, orientées parallèlement aux tuyaux **3.**

Cette fixation peut également résulter de techniques classiques, telles que notamment par couture.

On a représenté, en relation avec la figure 5 le principe de diffusion de l'eau ou du liquide d'irrigation. On observe ainsi d'une part, une diffusion résultant de phénomènes de capillarité inhérent à la structure de la nappe inférieure **2,** mais également une diffusion par le dessus du complexe, en raison d'un positionnement approprié des goutteurs **5,** dont sont munis les différents tuyaux et conduits d'irrigation **3.**

On observe qu'en raison des ouvertures dont est pourvue la grille **4** résultant de sa structure ajourée, rien ne s'oppose à la projection du liquide d'irrigation ou d'eau, liquide qui ensuite vient également diffuser dans la nappe de diffusion **2.**

Les goutteurs **5** sont avantageusement des gouteurs du type à clapet ou tout autre système régulateur de débit et anti-racinaire, tels que commercialisés par la société NETAFIM, assurant une double ou triple fonction respectivement de régulateur de débit et de pression du liquide d'irrigation ou de l'eau, et de système anti-colmatage propre à s'opposer à l'intrusion des racinaires provenant de la végétation appelée à être positionnée sur le complexe de l'invention.

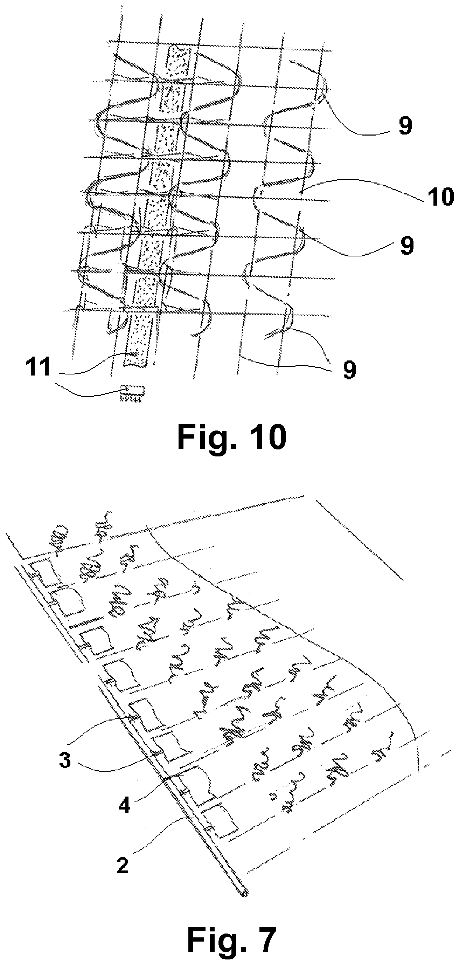

On a représenté en relation avec la figure 7 un exemple d'application du complexe d'irrigation textile de l'invention dans le domaine de l'agriculture. Celui-ci se présente en une ou plusieurs nappes de largeur conséquente, au sein desquelles on peut observer une disposition équidistante des tuyaux d'irrigation **3** permettant de conférer une optimisation de la répartition de l'irrigation et en outre une grande facilité et rapidité de pose.

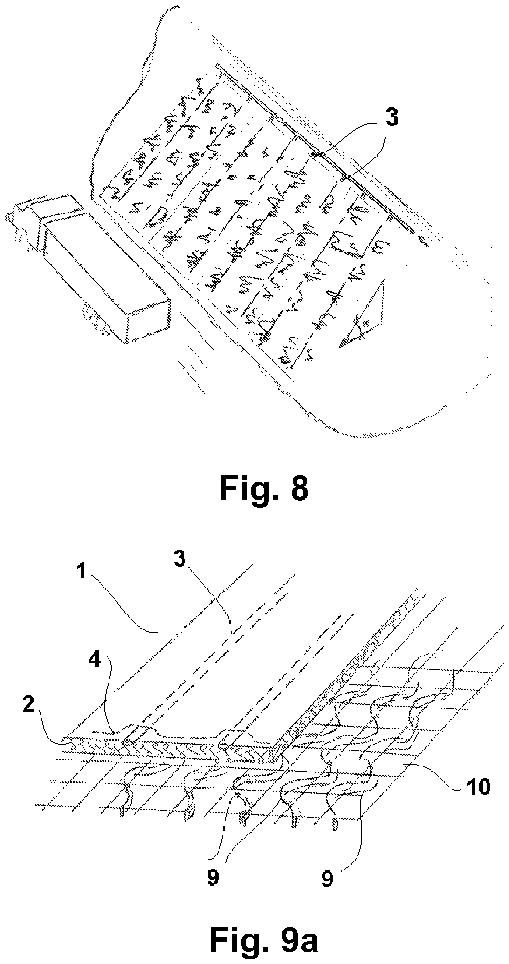

La figure 8 illustre un exemple de disposition des nappes sur une pente ou un talus. Dans ce cas de figure, les efforts liés à la charge inhérente à la terre végétale disposée au-dessus du complexe d'irrigation peut conduire à des efforts très importants en pied de talus. Ceci illustre dès lors l'intérêt de la grille alors renforcée, telle qu'illustrée à la figure 6b.

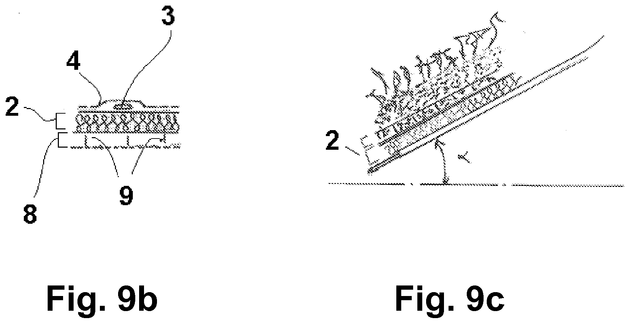

On a représenté, en relation avec les figures 9a à 9c la mise en œuvre d'une forme particulière de réalisation de l'invention, associant le complexe précité avec une structure bi-fonctionnelle de renfort et/ou de drainage et/ou de constitution d'une couche isolante inférieure.

En l'espèce, s'agissant d'une couche **8** susceptible de remplir une fonction de renfort, celle-ci est typiquement constituée de feuillards ou de bandelettes **9** maintenus essentiellement perpendiculaires par rapport au plan général de la grille **10** à laquelle ils sont associés de par l'armure mise en œuvre. Ces feuillards ou bandelettes **9** peuvent être mis en place au sein de la grille **10** au moyen des guides trameurs d'un métier RACHEL. La mise en œuvre de tels feuillards permet de conférer du volume et de l'épaisseur à cette couche **8.** Associés en outre à la grille **10** dans laquelle ils sont introduits par technologie RACHEL, il confère une certaine tenue mécanique, notamment dans le sens de la pente. A cet effet, ils sont avantageusement réalisés en polyester haute ténacité.

On peut associer cette structure de renfort inférieure **8** au complexe de l'invention, par exemple au moyen de bandes **11** de boucles ou de picots, selon la technologie VELCRO®, qui viennent s'agripper directement dans le non-tissé constitutif de la nappe de diffusion **2.**

Ces bandes **11** sont ainsi insérées dans la grille **10** de la structure de renfort inférieure entre deux jeux de fils de trame partielle de ladite grille **10.** Ce faisant, on comprend comme il devient aisé d'associer en usine le complexe d'irrigation à cette structure de renfort pour le livrer complet et prêt à être mis en œuvre. Le complexe d'irrigation va naturellement se fixer sur la structure inférieure par simple aggripage des picots ou boucles des bandes **11** dont est munie ladite structure inférieure sur le non tissé constitutif de la nappe de diffusion **2** du complexe d'irrigation.

Dans d'autres cas de figure de l'invention non représentés, le complexe d'irrigation peut alterner des tubes d'irrigation et des tubes de drainage. Il peut également être envisagé de remplacer les tubes de drainage par des câbles de chauffage ou tout autre dispositif fonctionnel ou de détection de type fibre optique instrumentée ou autre capteur.

Il résulte de la présente invention un certain nombre d'avantages, parmi lesquels on peut citer :
- la possibilité de disposer d'une haute définition en matière d'irrigation, de répartition et d'homogénéité d'eau ou de liquide nutritif avec des quantités parfaitement maitrisées ; cette maitrise permet de générer des économies substantielle en termes de consommation d'eau et d'aboutir à une plus grande régularité des productions agricoles, maraîchères.
- la réalisation d'un complexe de conception fiable, c'est-à-dire susceptible de maintenir les performances d'irrigation en toutes circonstances et quelles que soient les variations de température auxquelles il est exposé ;
- la mise à disposition d'un support autonome de végétalisation applicable sur toitures et bâtiments industriels et/ou sur toutes surfaces agricoles ;
- la possibilité de mettre en œuvre des composants parfaitement calibrés et associés industriellement de manière économique,
- la possibilité de pérenniser une végétation (sécurisation), voire à exprimer un potentiel de production (agronomique) avec une faible consommation en eau (low input) ;
- l'optimisation du rapport performance/poids avec intégration d'une couche inerte de fixation ou d'intégration d'éléments fonctionnels (tuyaux, câbles, capteurs, etc) par filets techniques (mailles) ;
- la possibilité de mettre en œuvre des matières recyclables.

## Revendications

1. Complexe d'irrigation textile comprenant une nappe de diffusion hydraulique (2) réalisée en un matériau non-tissé, et une pluralité de conduits ou tuyaux (3) au sein desquels transite l'eau ou le liquide d'irrigation, ***caractérisé* :**
• **en ce que** les conduits ou tuyaux (3) sont rapportés sur la nappe de diffusion hydraulique (2) au moyen d'une grille ouverte (4) tissée, tricotée ou extrudée, fixée à ladite nappe de diffusion hydraulique (2) par un moyen thermique ou ultrasonique, ou par couture ou collage ;
• **en ce que** les conduits ou tuyaux (3) ne sont pas solidaires de ladite grille ouverte (4) ; et
• **en ce que** l'association de la ou des grilles ouvertes (4) avec la nappe de diffusion hydraulique (2) définit des poches, au sein desquels les conduits ou tuyaux (3) présentent une faculté de débattement latéral, c'est-à-dire selon une direction autre que la dimension principale de leur extension.

2. Complexe d'irrigation textile selon la revendication 1, ***caractérisé* en ce que** la nappe de diffusion hydraulique (2) est constituée d'un non-tissé à base de fibres, et notamment de fibres recyclées, par exemple en polypropylène ou en fibres naturelles.

3. Complexe d'irrigation textile selon l'une des revendications 1 et 2, ***caractérisé* en ce que** la nappe de diffusion hydraulique (2) présente une masse surfacique comprise entre 200 et 500 g/m², une capacité de rétention d'eau comprise entre 200 et 800 % correspondant à une valeur de rétention de 0.6 à 3.2 l/m².

4. Complexe d'irrigation textile selon l'une des revendications 1 à 3, ***caractérisé* en ce que** la grille ouverte (4) est constituée de bandes, c'est-à-dire dont l'une des dimensions est nettement inférieure à la dimension correspondant à la dimension selon laquelle s'étendent les tuyaux ou conduits d'irrigation au sein du complexe.

5. Complexe d'irrigation textile selon l'une des revendications 1 à 4, ***caractérisé* en ce que** les tuyaux ou conduits d'irrigation sont munis d'un système régulateur de débit et anti-racinaire, et notamment de goutteurs à clapet.

6. Complexe d'irrigation textile selon l'une des revendications 1 à 5, ***caractérisé* en ce qu'**il est associé à un espaceur, solidarisé réversiblement à la nappe de diffusion hydraulique (2).

7. Complexe d'irrigation textile selon la revendication 6, ***caractérisé* en ce que** l'espaceur est réversiblement fixé à la nappe de diffusion hydraulique (2) au moyen de picots ou boucles montés sur une ou plusieurs bandes (11) intégrées dans la structure de l'espaceur.

8. Complexe d'irrigation textile selon l'une des revendications 6 et 7, ***caractérisé* en ce que** l'espaceur est constituée d'une structure textile associant des fils de renforcement, notamment réalisés en polyester ou polypropylène haute ténacité afin de conférer à l'ensemble du complexe une résistance mécanique accrue.

9. Complexe d'irrigation textile selon l'une des revendications 1 à 8, ***caractérisé* en ce que** la grille ouverte (4) est du type à chainettes tramées ou marquisette.

10. Complexe d'irrigation textile selon l'une des revendications 1 à 8, ***caractérisé* en ce que** la grille ouverte (4) est du type à mailles jetées avec insertion de câbles cabestan dans le sens production.

11. Complexe d'irrigation textile selon l'une des revendications 1 à 10, ***caractérisé* en ce que** les poches définies par l'association de la ou des grilles ouvertes (4) avec la nappe de diffusion hydraulique (2) reçoivent en outre des tuyaux de drainage, des tuyaux ou des câbles de chauffage, voire des éléments linéaires susceptibles d'assurer d'autres fonctions, notamment de détection par une fibre optique instrumentée ou tout autre capteur.

## Patentansprüche

1. Textilkomplex zur Bewässerung, der eine Flüssigkeitsdiffusionsschicht (2) aus einem Vliesmaterial und mehrere Leitungen oder Schläuche (3), in denen das Wasser oder die Bewässerungsflüssigkeit fließt, umfasst, **dadurch gekennzeichnet:**
• **dass** die Leitungen oder Schläuche (3) auf der Flüssigkeitsdiffusionsschicht (2) mittels eines offenen Gitters (4) befestigt sind, das gewebt, gewirkt oder extrudiert sein kann, und an dieser Flüssigkeitsdiffusionsschicht (2) durch ein Wärme- oder Ultraschallverfahren oder durch Nähen oder Kleben befestigt ist;
• **dass** die Leitungen oder Schläuche (3) mit diesem offenen Gitter (4) nicht fest verbunden sind; und
• **dass** die Verbindung des oder der offenen Gitter (4) mit der Flüssigkeitsdiffusionsschicht (2) Taschen definiert, in denen die Leitungen oder Schläuche (3) die Fähigkeit zur seitlichen Bewegung aufweisen, das heißt in eine andere Richtung als die Hauptrichtung, in die sich erstrecken.

2. Textilkomplex zur Bewässerung nach Anspruch 1, ***dadurch gekennzeichnet, dass*** die Flüssigkeitsdiffusionsschicht (2) aus einem Vlies auf Faserbasis besteht, insbesondere aus Recycling-Fasern, zum Beispiel aus Polypropylen oder Naturfasern.

3. Textilkomplex zur Bewässerung nach einem der Ansprüche 1 und 2, ***dadurch gekennzeichnet, dass*** die Flüssigkeitsdiffusionsschicht (2) ein Flächengewicht zwischen 200 und 500 g/m² aufweist, eine Wasserrückhaltungskapazität zwischen 200 und 800 % haben, was einem Rückhaltungswert von 0.6 bis 3.2 1/m² entspricht.

4. Textilkomplex zur Bewässerung nach einem der Ansprüche 1 bis 3, ***dadurch gekennzeichnet, dass*** das offene Gitter (4) aus Streifen besteht, das heißt eines der Maße ist wesentlich kleiner als das Maß der Richtung, in der die Bewässerungsschläuche oder -leitungen innerhalb des Komplexes verlaufen.

5. Textilkomplex zur Bewässerung nach einem der Ansprüche 1 bis 4, ***dadurch gekennzeichnet, dass*** die Bewässerungsschläuche oder -leitungen mit einem Durchflussregler und einem Durchwurzelungsschutz und insbesondere mit einem Tropfer mit Klappe versehen sind.

6. Textilkomplex zur Bewässerung nach einem der Ansprüche 1 bis 5, ***dadurch gekennzeichnet, dass*** er mit einem Abstandhalter verbunden ist, der reversibel an der Flüssigkeitsdiffusionsschicht (2) befestigt ist.

7. Textilkomplex zur Bewässerung nach Anspruch 6, ***dadurch gekennzeichnet, dass*** der Abstandshalter an der Flüssigkeitsdiffusionsschicht (2) mittels Häkchen oder Schlaufen reversibel befestigt ist an einem oder mehreren Streifen (11) die in die Struktur des Abstandshalter integriert sind.

8. Textilkomplex zur Bewässerung nach einem der Ansprüche 6 und 7, ***dadurch gekennzeichnet, dass*** der Abstandshalter aus einer Textilstruktur besteht, die Verstärkungsfäden enthält, insbesondere aus hochfestem Polyester oder Polypropylen um dem ganzen Komplex eine erhöhte mechanische Festigkeit zu verleihen.

9. Textilkomplex zur Bewässerung nach einem der Ansprüche 1 bis 8, ***dadurch gekennzeichnet, dass*** das offene Gitter (4) vom Typ gerasterte Ketten oder Markisette ist.

10. Textilkomplex zur Bewässerung nach einem der Ansprüche 1 bis 8, ***dadurch gekennzeichnet, dass*** das offene Gitter (4) vom Kettenwirktyp ist, mit Eintrag von Kapstanseilen in Produktionsrichtung.

11. Textilkomplex zur Bewässerung nach einem der Ansprüche 1 bis 10, ***dadurch gekennzeichnet, dass*** die Taschen, die durch die Verbindung des oder offenen Gitter (4) mit der Flüssigkeitsdiffusionsschicht (2) definiert sind, außerdem Drainageschläuche, Heizschläuche oder Kabel aufnehmen, sogar lineare Elemente, die auch andere Funktionen übernehmen können, insbesondere die der Detektion durch eine messtechnische optische Faser oder jeden anderen Sensor.

## Claims

1. A textile irrigation complex comprising a fluid diffusion layer (2) made of a nonwoven material, and a plurality of conduits or pipes (3) having the water or irrigation liquid transiting therethrough, ***characterized in that:***
• the conduits or pipes (3) are secured to the fluid diffusion layer (2) by means of a woven, knitted or extruded open mesh fabric (4), which is fixed to the fluid diffusion layer (2) by thermal or ultrasonic means, or by sewing or gluing;
• **in that** the conduits or pipes (3) are not secured to said open mesh fabric (4) ;
• and **in that** the association of the open mesh fabric(s) (4) with the fluid diffusion layer (2) defines pockets within which the conduits or pipes (3) have the ability to displace laterally, that is, along a direction other than their main extension dimension.

2. The textile irrigation complex of claim 1, ***characterized in that*** the fluid diffusion layer (2) is made of a nonwoven based on fibers, and particularly on recycled fibers, for example, made of polypropylene or of natural fibers.

3. The textile irrigation complex of any of claims 1 and 2, ***characterized in that*** the fluid diffusion layer (2) has a mass density in the range from 200 to 500 g/m², a water retention capacity in the range from 200 to 800% corresponding to a retention value from 0.6 to 3.2 l/m².

4. The textile irrigation complex of any of claims 1 to 3, ***characterized in that*** the open mesh fabric (4) is formed of strips, that is, having one dimension much smaller than the dimension corresponding to the dimension along which the irrigation pipes or conduits extend within the complex.

5. The textile irrigation complex of any of claims 1 to 4, ***characterized in that*** the irrigation pipes or conduits are provided with a flow regulation and root control system, and particularly with valve drips.

6. The textile irrigation complex of any of claims 1 to 5, ***characterized in that*** it is associated with a spacer, reversibly secured to the fluid diffusion layer (2).

7. The textile irrigation complex of claim 6, ***characterized in that*** the spacer is reversibly secured to the fluid diffusion layer (2) by means of hooks or loops assembled on one or several strips (11) integrated in the spacer structure.

8. The textile irrigation complex of any of claims 6 and 7, ***characterized in that*** the spacer is formed of a textile structure associating reinforcing threads, particularly made of high-tenacity polyester or polypropylene to provide the general complex with an increased mechanical resistance.

9. The textile irrigation complex of any of claims 1 to 8, ***characterized in that*** the open mesh fabric (4) is of pillar stitch or marquisette type.

10. The textile irrigation complex of any of claims 1 to 8, ***characterized in that*** the open mesh fabric (4) is of warp knitting type with capstan cables inserted in the production direction.

11. The textile irrigation complex of any of claims 1 to 10, ***characterized in that*** the pockets defined by the association of the open mesh fabric(s) (4) with the fluid diffusion layer (2) further receive drainage pipes, heating pipes or cables, or even linear elements capable of performing other functions, particularly of detection by an instrumented optical fiber or any other sensor.
